# EUROPEAN PATENT APPLICATION

(11) **EP 0 990 971 A1**
(43) Date of publication of application: **05.04.2000**
(21) Application number: 99200433.3
(22) Date of filing: 16.02.1999
(51) Int. Cl.: G06F 1/00

(54) **Computer configuration for interfacing to a secure data carrier**

(30) Priority: 30.09.1998 EP 98203317; 19.01.1999 EP 99200131
(71) Applicant: Semiconductor Ideas to The Market (ItoM) BV, 4839 AH Breda (NL)
(72) Inventor: Van Rumpt, Herman Wouter, 5235 HC 's Hertogenbosch (NL)

(57) **Abstract**

A computer configuration interfaces to a secured data body with data storage, for therewith exchanging confidential information along a logical link that maps transiently on a physical link. In particular, a bidirectional interruption facility is present on the physical link that is bridged by a controller. The interruption is made operational through recognizing an appropriate control signal on the physical link that signals a forthcoming exchange. This makes data transfer mandatory through the controller.

## Description

### BACKGROUND OF THE INVENTION

The invention relates to a system as recited in the preamble of Claim 1. As will be discussed hereinafter, smart cards and other secure data carriers are being used in relatively uncontrolled environments, such as Personal Computer configurations based at customer premises, and which configurations find application for transferring confidential information to remote places. For these purposes, so-called trusted hardware has been designed. The precise locating of such trusted hardware is a problem that should be subject to requirements for high security and low cost. The amending as well as the acquiring of such secret information by non-entitled parties should be avoided with a very high probability, while still allowing a user person to enter secret informations such as PIN codes on a standard keyboard by rendering secure all communication between the keyboard and higher-level data-processing facilities. The invention can in principle be applied with magstripe cards as well. In such case, there is a security barrier within a reader to avoid leakage of secret information. Smart cards have such barrier on the card itself to block external presentation of the card's PIN code

### SUMMARY TO THE INVENTION

In consequence, amongst other things, it is an object of the present invention to provide a system as recited, wherein the trusted hardware has isolating facilities operative on a standard communication path in such configuration, to rendering eavesdropping practically impossible. Now therefore, according to one of its aspects the invention is characterized according to the characterizing part of Claim 1.

The invention also relates to a Method for Operating such Configuration, and to Keyboard Means, Communication Path Means, Consumer Level Computer Means, and Packaged Trusted Hardware Means arranged for application in a system according to the invention. Further advantageous aspects of the invention are recited in dependent Claims.

### BRIEF DESCRIPTION OF THE DRAWING

These and further aspects and advantages of the invention will be discussed more in detail hereinafter with reference to the disclosure of preferred embodiments, and in particular with reference to the appended Figures that show:
Figures 1A-1D various possible system configurations;
Figure 2A, a solution with a low-cost external card reader;
Figure 2B, a solution with a fully qualified external card reader;
Figure 3, an embodiment of the invention realized in special hardware;
Figure 4, an integrated solution with integration in the Super I/O;
Figure 5, a solution embodiment detailed on a wires-and-gates level;
Figure 6, a flow chart pertaining to the operation of the invention.

### DETAILED DESCRIPTION OF PREFERRED EMBODIMENTS

Smart-cards are a secure and widespread computing platform well-suited to provide high security and privacy functionality for applications running in general purpose computing environments such as Personal Computers. Smart-cards store sensitive information such as private keys, account numbers, passwords and other. They also provide isolated processing facility to use this information without exposing it within a PC environment where it is at risk from hostile code.

Currently, use of Smart-cards in a PC environment is hampered by a lack of interoperability at several levels. The industry lacks standards for interfacing PCs to Smart-card Readers. This has made it difficult to create applications that can work with Smart-card Readers from a variety of vendors. Furthermore, an existing Smart-card Reader may not work with future applications. However, standardizing efforts, as well as the introduction of the "electronic wallet" will increase the demand for a low-cost smart-card interface on the PC. The following implementations for a card reader are feasible:
1. Smart card reader in a Floppy drive form factor, interfacing via a serial port. This solution is expensive and needs a drive bay and an interface card slot.
2. Smart card reader in a Keyboard, interfacing via PS2 or USB. It is possible to deliver every system with an optional keyboard with smart card facility. The **PCSC** spec defines an option for interfacing a smart card. For effecting smart card supported payments over the WEB, present requirements forbid to enter a PIN code directly into the PC, which necessitates a special keypad for PIN code entry. This may be integrated into a standard keyboard, but will necessitate a display for reading the transferred amount of money. It has been specified to let a separate controller, such as a keyboard controller, handle these functions, instead of the main CPU. However, this solution is tedious in Europe, because of the many different keyboard versions in use.
3. Smart card reader in the system cabinet (fixed), interfacing via serial USB. This solution will solve the problems of solution 1 but the cost is still high.
4. Smart card reader in the system cabinet (fixed), the interface being integrated in Super I/O, which is the most cost effective solution.

Various different type of readers are available in the market. Low cost readers do not have an integrated display or a keyboard, and are not acceptable for payments over the Internet. In such application it is necessary to enter the PIN code, the amount of money to be transferred, and possibly, other security quantities, and a confirmation display of the transferred sum is necessary. However, readers featuring a display and a keyboard are not trusted hardware such as shown in Figure 1A. Here the PC is used as interface with the application software running thereon. The latter can be affected by a virus program and get the PIN code from the user. Also the amount of money to be transferred may be changed. Even the confirmation button can be simulated by a virus program. Finally, integrating the reader in the PC cabinet will cause problems as this necessitates a separate keyboard to enter the PIN code and the amount of money. This will be mechanically difficult and expensive.

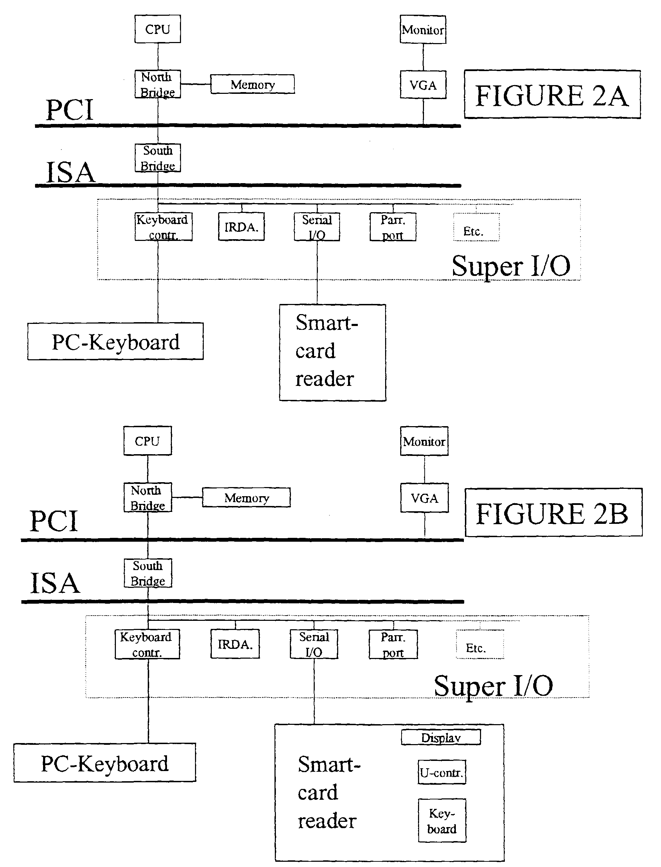

Solving this problem with a PC keyboard implies using an unsafe data path. Hereinafter, various different solutions are described. First, Figure 2A shows a solution with a low-cost external card reader. Data go from the PC-keyboard via the Keyboard controller, ISA bus, south bridge, and the PCI bus to the north bridge. Subsequently, the data will be processed by the application running on the CPU and Memory. The application will send information back via the PCI, ISA and the Serial I/O to the micro-controller on the Smart card reader and thence to the Smart-card itself. With this method the data may be manipulated by a virus program

Figure 2B presents a solution with a fully qualified external card reader. Now, the data will be entered on the keyboard of the reader. The data will go into the microcontroller and then to the smart-card. Here, the data going towards the Smart-card cannot be manipulated by a Virus Program running on the main CPU.

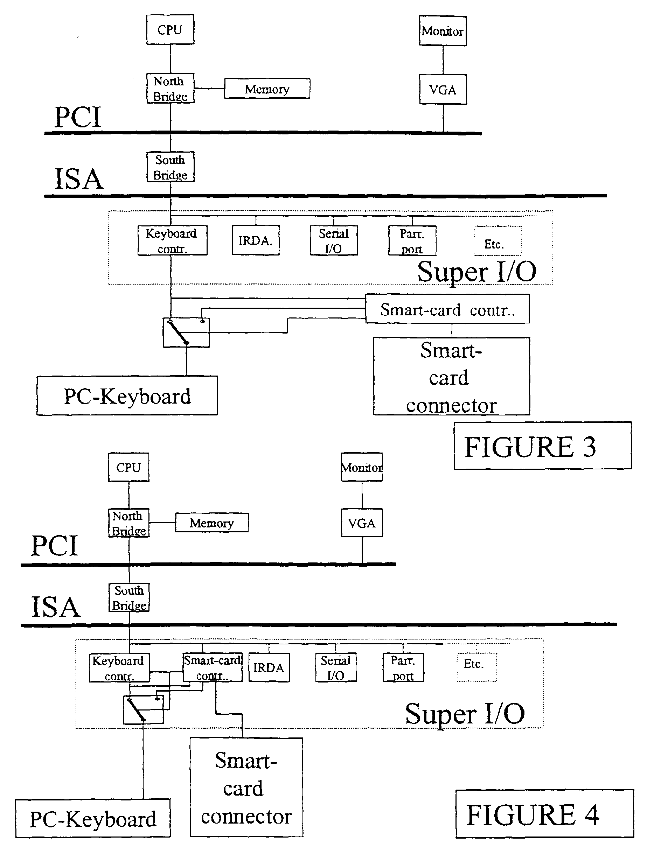

Figure 3 shows an embodiment of the invention realized in special hardware. A request by the smart-card for data input will get known in the Smart-card controller, which will switch-over the PC-keyboard signals from the PC-keyboard controller to the Smart-card controller. Data may be entered into the keyboard and will go through the smart-card controller and towards the Smart-card itself. Now a virus program running on the main CPU can no more manipulate the data. If the data have been entered, an appropriate control signal will switch the data path from the PC-keyboard back to the normal keyboard controller. However, compatibility problems viz a viz the software may occur.

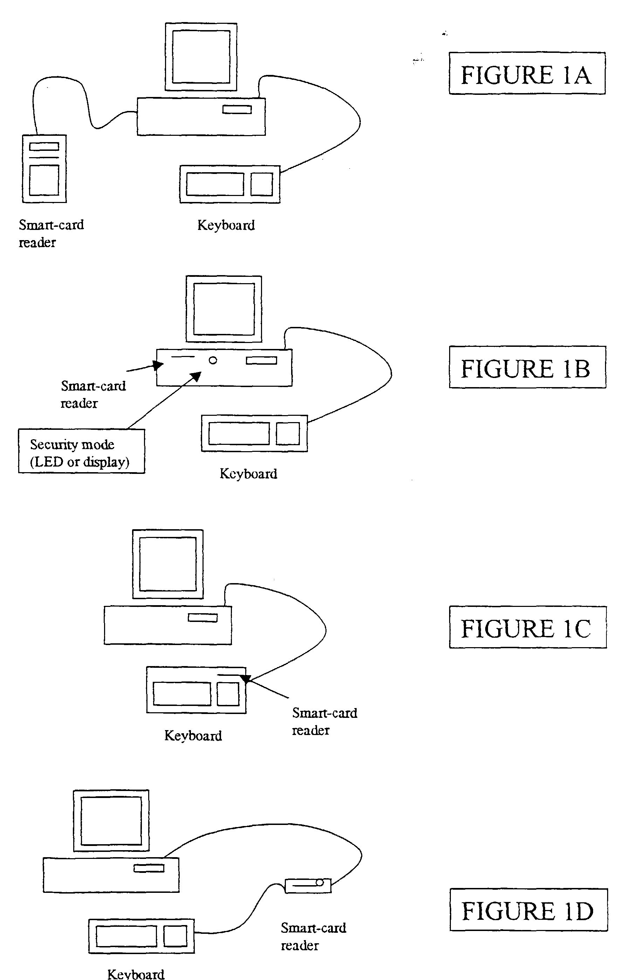

Figure 4 shows a solution with integration in the Super I/O. Switchover can be effected without compatibility problems. The only complication is that data being sent to the keyboard by **another** application running on the main CPU may be lost. So a good solution is to integrate this together in the Super I/O. Then it is possible to apply the same control signal also to the keyboard controller to put the data path from the input registers in the keyboard controller on hold to avoid loosing data. Compatibility problems are less than in other solutions. In this respect, Figure 1A shows the present solution where the reader requires an extra keyboard. Figure 1B shows the configuration where the reader is in the PC, and the PC has a LED for signaling a security operation being actually performed. Figure 1C shows the smart card reader integrated in the keyboard. Figure 1D has a separate smart card reader. None of the solutions of the Figures 1B-1D needs an additional keyboard; all of these configurations will be rendered secure through the teachings of the invention. Next to the display of the single bit in Figure 1B, it is possible to display as a representation of the PIN code digits being entered, a string of dummy digits such as asterisks on the display for signaling the progress of the entering. Also, in certain configurations, actual screen display of digital data pertaining to the security operations, not being the PIN code, may be judged advantageous for enhancing user trust. The indicator means may be joined to the controller housing, such as shown actually in Figure 1D. Various elements of the configurations shown, such as separate keyboard, PC, smart card reader, or semiconductor product may actually embody the invention as disclosed and claimed, for separate commercial exploitation.

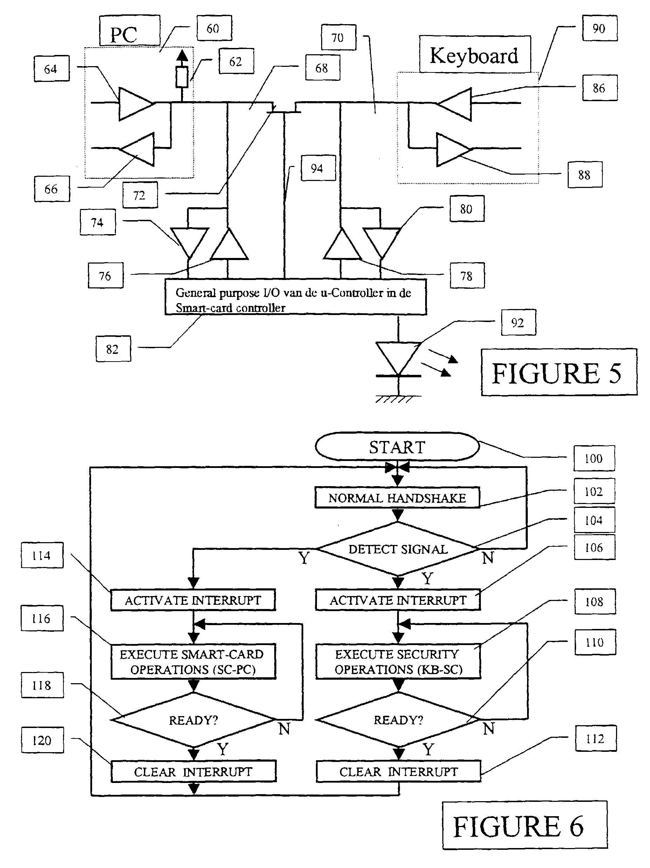

Figure 5 presents an embodiment of the invention detailed on a wires-and-gates level. For simplicity, only one physical wire and associated circuitry has been shown. A full implementation needs one clock wire, as well as one data wire, that may have identical circuitry as the one shown. The solution may have a handshake implemented between the keyboard and Super I/O controllers. A software solution would be complex, but the configuration as shown causes no operating problems if the smart card is not active, so that a high level of compatibility is effected. In the Figure, the PC 60 at left comprises output buffer 64 and input buffer 66, line 68 being connected by pull-up resistor 62 to an appropriate voltage level. The secure hardware has been realized in a TDA8006 Microcontroller from Philips Electronics, of which the general purpose I/O driver has been symbolized by block 82. The microcontroller is housed in an appropriate package that can also contain a conventional berth, such as a slit, for entering a smart card. At the side of the PC, items 74, 76 represent a bidirectional buffer stage. Likewise, at the side of the keyboard 90 items 78, 80 represent a bidirectional buffer stage that attaches to line 70. The latter attaches in keyboard 90 via bidirectional buffer pair 86, 88. Left and right wire parts 68, 70 have been separated by gate 72 that can be a FET-based switch of known design. Control is through line 94 driven by hardware 82. The set-up can be simplified if processing speed in controller 82 is large enough: this would allow to do away with switch 72 and have controller 82 take up to internally interrupt the line: for standard communication, the controller then operates as a transparent bidirectional buffer, while still monitoring for any forthcoming smart card operation. Furthermore, buffer 78 in many cases may be omitted due to the low load represented by keyboard 90, in combination with transport speed used. Redesign of the controller with larger internal buffers can make most of the external buffers superfluous.

An additional feature is LED 92, that signals when certain secrecy-related procedures are being executed in microcontroller 82. This is one of various user-interface-related features that lets a user person appreciate the actual running of secrecy-related processes. A higher-level solution is to provide a multi-digit display to signal various transaction parameters such as money amounts.

Advantages of the above are various. The additional controller IC maybe located in the PC, in the keyboard, or as add-on hardware such as shown in Figure 5. This would upgrade an existing combination, such as one that up to now was not used for performing the kind of secret operations described. For example, the invention can be packaged in a WEB TV set or in a so-called set top box that is an extension facility to certain standard TV sets.

Figure 6 is a flow chart pertaining to the operation of the invention. In block 100 the process is started and the necessary hardware and software facilities are claimed. In block 102 the standard handshaking is operated, which is irrelevant to the present invention and will not be detailed further hereinafter. In block 104 the signalizing for a forthcoming security operation is detected, such as a specific initial control signal. As long as the outcome is negative, loop 102/104 is continually traversed. When the detection is positive then an interrupt is activated in block 106, when a security operation between the smart card controller and the keyboard is detected to be forthcoming, respectively in block 114, when a security operation between the smart card controller and the PC is detected to be forthcoming. The handshaking will be interrupted, and the associated transfer stopped, because the smart card controller can now determine the operations on the physical link. Following block 106, respectively block 114, the logical link for the security operations can be activated on the same physical link, and the security operations proper executed in block 108, respectively block 116. By themselves, these operations can be conventional. Furthermore, a "ready" situation is awaited in block 110, respectively block 118, through a specific code, through a predetermined time lapse, or otherwise. As long as negative, the loop 108/110, respectively the loop 116/118, prevails. When positive however, the system clears the interrupt in block 112, respectively block 120, and goes back to block 102. For brevity, the overall stopping of the flow diagram has not been detailed herein.

The invention, however, may also be used for security operations between the smart card controller and the keyboard only, i.e. without executing blocks 114-120 in the flowchart.

## Claims

1. A computer configuration provided with interface means for interfacing to a secured data body with data storage facilities, for exchanging with said facilities confidential information along a logical link that is transiently operative on a physical link, characterized by having on said physical link a bidirectional interruption facility that is bridged by controller means, and is rendered operational through recognition means for recognizing an appropriate control signalizing on said physical link as signaling a forthcoming undertaking of said exchanging, thereby making data transfer mandatory through said controller means.

2. A configuration as claimed in Claim 1, wherein said data body has been provided with data processing facilities with an internal security barrier means.

3. A configuration as claimed in Claim 1, wherein said interruption facility comprises hardwared gate means under control of said controller means.

4. A configuration as claimed in Claim 1, wherein said interruption facility comprises said controller means which then operates as a transparent bidirectional buffer.

5. A configuration as claimed in Claim 1, and having indicator means joined to the controller means for signalling at least a part of trusted operations being actually performed.

6. A configuration as claimed in Claim 5, wherein said indicator means are arranged for displaying multi-digit quantitative data as pertaining to said transaction.

7. A configuration as claimed in Claim 1, wherein said physical link is restricted to a single data wire and a single clock wire.

8. A configuration as claimed in Claim 1 wherein an entered PIN into the keyboard is processed in the controller means and the configuration is furthermore arranged for then transmitting a fake code string to the computer.

9. A configuration as claimed in Claim 1, wherein a quantitative security data entered into the keyboard is processed in the controller means and the configuration is furthermore arranged for then transmitting an identical data to the computer for un-amended display.

10. Keyboard Means for use in said configuration and having said berth means and said controller means on-board.

11. Communication Path Means arranged for use in said configuration and having said berth means and said controller means on-board.

12. Consumer Level Computer Means for use in said configuration and having said berth means and said controller means on-board.

13. Packaged Trusted Hardware Means arranged for use in said configuration and having said berth means and said controller means on-board.

14. A method for operating a configuration as claimed in Claim 1, through interfacing to a secured data body with data storage facilities, for exchanging with said facilities confidential information whilst rendering transiently operative a logical link on a physical link, characterized by providing on said physical link a bidirectional interruption facility that is bridged by controller means, and rendered such facility operational through recognizing an appropriate control signalizing on said physical link as signaling a forthcoming undertaking of said exchanging, thereby making data transfer mandatory through said controller means.
